# EUROPEAN PATENT SPECIFICATION

(11) **EP 3 160 747 B1**
(45) Date of publication and mention of the grant of the patent: **19.12.2018**
(21) Application number: 15812244.0
(22) Date of filing: 25.06.2015
(51) Int. Cl.: B32B 29/00, B32B 7/14, B32B 27/08, B32B 29/04

(54) **FILM LAMINATED, WATER ACTIVATED PAPER TAPE AND METHODS OF MAKING SAME**
FOLIENLAMINIERTES, WASSERAKTIVIERTER LOCHSTREIFEN UND VERFAHREN ZUR HERSTELLUNG DAVON
STRATIFIÉ DE FILM, BANDE ACTIVÉE À L'EAU ET LEURS PROCÉDÉS DE FABRICATION

(30) Priority: 25.06.2014 US 201462016685 P
(43) Date of publication of application: 03.05.2017
(73) Proprietor: Intertape Polymer Corp., Sarasota, FL 34232 (US)
(72) Inventor: ARTHURS, Trevor, Truro, Nova Scotia B2N 2S6 (CA); NELSON, Shawn, Patrick, Bradenton, FL 34202 (US)
(74) Representative: Barker Brettell LLP
(86) International application number: PCT/US2015/037703
(87) International publication number: WO 2015/200643

(56) References cited:
- JP-A- H05 247 423
- US-A- 4 351 877
- US-A- 5 190 798
- US-A- 5 686 180
- US-A- 5 686 180
- US-A- 5 780 150
- US-A- 5 804 024
- US-A- 5 962 099
- US-A1- 2004 051 198
- US-A1- 2008 102 254
- US-A1- 2013 122 290
- US-B2- 7 544 422
- US-B2- 7 601 420

## Description

### RELATED APPLICATIONS

### FIELD OF THE INVENTION

The present invention relates to new water activated paper adhesive tapes having a film reinforcement extrusion laminated to the paper thereof, which is particularly useful as a carton or box sealing tape.

### BACKGROUND OF THE INVENTION

Adhesive tapes for sealing cartons or carton flaps during manufacture or after the carton is filled are well known. One of the most common constructions is a standard Kraft paper tape which includes a water soluble or water activated adhesive on one side. Rolls of this tape can be dispensed through machines which rely on the longitudinal stiffness of the tape to unwind it from the roll and force it through a tape moisturizing component. This component includes a water reservoir which moistens the adhesive surface of the tape and readies it for application to the carton.

Various improvements to this type of tape have been tried over the years to meet differing requirements in the manufacture and sealing of cartons. For example, multiple layered tapes using reinforcing fibers generally made of fiberglass and extending longitudinally and/or angularly across this tape to increase its strength are conventionally used for higher closure strength requirements. Although the tape is harder to tear due to the reinforcing fibers, this construction results in the somewhat rough and uneven surface both along the top and bottom of the tape, as well in a tape construction that is somewhat thicker than the conventional Kraft tape. This uneven surface and thicker tape causes a standard size roll to be of a shorter length for any given diameter compared to conventional tapes.

US2013122290 discloses masking tapes that change color when the tape is rubbed down or dispensed onto an adherend and methods of making such tapes. The tape includes a backing, a layer of adhesive on the bottom surface of the backing, and a release structure on the top surface of the backing that includes a pressure-chromic indicator and a release layer. The pressure-chromic indicator is not activated by the pressure applied during the manufacturing process, but is activated by the pressure applied when the tape is rubbed or dispensed onto an adherend.

US5686180 discloses an adhesive containing a primary water soluble adhesive agent, an adhesion promoter for providing initial tack to composition, and a water soluble polymer comprising an imine compound in an amount sufficient to provide adhesion to polymeric films and preferential anchorage of such films to a substrate. The primary adhesive agent is generally present in the amount of about 2 to 60% by weight, the adhesion promoter is generally present in an amount of about 5 to 30% by weight and the imine compound is generally present in the amount of about 0.1 to 7% by weight of the adhesive, with the balance being water. The adhesive include one or more of the following optional components: a primary chelating agent in an amount of about 0.5 to 6% by weight, a thinning agent in an amount of up to about 1% by weight, or a secondary chelating agent, a wetting agent, or a humectant, each in an amount of up to about 3% by weight of the adhesive. Also, a method of making the adhesive is disclosed, the adhesive produced by the method and articles such as package sealing tapes having a substrate such as a plastic film with one of the adhesives described above provided on at least a portion and preferably substantially all of one surface of the plastic film.

US5962099 discloses a pressure-sensitive tape for sealing cartons and for other applications requiring a flexible tape of exceptional strength and of sufficient body so that the tape in roll form may be dispensed from a conventional pull-and-tear tape dispenser. The tape is composed of a paper-plastic film laminate having a first ply of biaxially-oriented, synthetic-plastic film, cold-laminated by a water-based adhesive to a second ply formed of paper. The inner surface of the film ply is corona-discharge treated to render it wettable and receptive to the adhesive, thereby producing a strong adhesive bond to the paper ply that is resistant to delamination of the tape. One side of the laminate which may be either the paper or the film side, is coated with a pressure-sensitive adhesive, whereas the other side is coated with a silicone release agent to prevent blocking, whereby the tape may be wound into a roll for loading a tape dispenser.

US5804024 discloses a paper-film laminate sealing tape for sealing a corrugated board carton or other article fabricated of recyclable material. The tape is composed of a base ply formed of oriented synthetic plastic film whose opposing surfaces are corona-discharge treated to render them wettable and receptive to adhesives, and a paper face ply cold laminated to the base ply by a water-based adhesive. The exposed surface of the film base ply is coated with a water-remoistenable adhesive, such as a starch, so that when this adhesive is moistened in a tape dispenser, the sealing tape can then be adhered to the carton. Since the re-moistenable adhesive is coated on the film ply which is water-impermeable, when this adhesive is moistened with water it remains in a moistened state in a condition to be applied to the carton for a controlled "open-time" period. Because of the strong bond between the film base ply and the paper face ply which resists delamination, the laminate tape adhered to the carton may be stripped therefrom, so that the carton can then be recycled or reused.

US578-150 discloses a paper-film laminate sealing tape for sealing a corrugated board carton or other article fabricated of recyclable material. The tape is composed of a base ply formed of high-strength, oriented synthetic plastic film whose opposing surfaces are corona-discharge treated to render them wettable and receptive to adhesives, and a paper face ply adhesively laminated to the base ply. The exposed surface of the base plastic-film ply is coated with a water-remoistenable adhesive, so that when this adhesive is moistened in a tape dispenser, the sealing tape can then be adhered to the carton. Since the remoistenable adhesive is coated on the plastic film ply which is water-impermeable, when this adhesive is moistened with water it remains in a moistened state in a condition to be applied to the carton for a relatively long "open-time" period. By reason of the strong bond between the plastic film ply and the paper face ply which resists delamination, the tape adhered to the carton may be stripped in toto therefrom, so that the carton may then be recycled. US2008102254 discloses a reinforced packing tape with tamper indicator.

Previous attempts to add plastic films to tapes have been inadequate. In one aspect, the plastic film was used as the layer to carry the water activated adhesive. The problem with this attempt is that the plastic film cannot hold a water soluble or water activatable adhesive very effectively. In another aspect, plastic film was cold laminated to a paper backing using an adhesive to develop a tape where the plastic could be stripped away after application because of the low bond strength provided by the adhesive between the plastic film and the paper backing. Neither are desired characteristics for the water activated paper tape disclosed herein. Thus, the disclosed water activated paper tapes are an improvement over these previous attempts to use a plastic film in a water activated tape.

### SUMMARY OF THE INVENTION

One aspect of the invention is a water activated paper tape, and, more particularly, a carton sealing tape including a film reinforcement extrusion laminated to the paper backing thereof. The water activated tapes have a paper backing having a top surface and a bottom surface, a water activated adhesive applied to the bottom surface of the paper backing, and a film reinforcement structure applied to the top surface of the paper backing. The film reinforcement structure results in a hand-tearable water activated tape and includes an outermost oriented polyolefin film, and a lamination layer comprising one or more of an enhanced polyethylene resin, a polyolefin plastomer, a very low density polyethylene, a nylon, a polyester, and a co-polyester laminating the outermost polyolefin film to the paper backing. These two layers are coextruded onto the paper backing, such as Kraft paper.

In one embodiment, the outermost oriented polyolefin film is a biaxially oriented polypropylene film. In another embodiment, the outermost oriented polyolefin film is a biaxially oriented polyethylene terephthalate. In either case, the outermost polyolefin film may have a thickness of about 0.5 mil to about 2 mil.

The lamination layer likewise has a thickness of about 0.5 mil to about 2 mil, or more preferably about 1 mil to about 1.3 mil. In one embodiment, the lamination layer includes, as the majority thereof, an enhanced polyethylene resin, and may include one or more other polyethylene resins. In one embodiment, low density polyethylene resin is included in the lamination layer composition with the enhanced polyethylene resin and the enhanced polyethylene resin is about 60% w/w to 99% w/w of the lamination layer.

In another aspect, methods of making such a water activated tape are disclosed herein. The methods include providing a water activated paper tape comprising a paper backing having a water activated adhesive defining a bottom major surface thereof, and extrusion laminating to the paper backing, opposite the water activated adhesive, a film reinforcement structure. The film reinforcement structure includes an outermost oriented polyolefin film, and an innermost lamination layer comprising one or more of an enhanced polyethylene resin, a polyolefin plastomer, a very low density polyethylene, a nylon, a polyester, and a co-polyester. The extrusion laminating places the innermost lamination layer contiguous to the paper backing and includes coextruding the outermost polyolefin film and the innermost lamination layer, and thereafter reducing the temperature of the tape. In one embodiment, coextruding includes extruding the outermost polyolefin film to have a thickness of about 0.5 mil to about 2.0 mil and extruding the innermost lamination layer to have a thickness of about 0.5 mil to about 2.0 mil.

In one embodiment, the method may also include providing the paper backing and applying the water activated adhesive to a bottom major surface thereof. The lamination layer composition is as described above and the oriented polyolefin film may be a biaxially oriented polypropylene film or a biaxially oriented polyethylene terephthalate.

### BRIEF DESCRIPTION OF THE DRAWINGS

FIG. 1 is a perspective view of a roll of tape for one embodiment of the invention.
FIG. 2 is an enlarged cross-sectional view of the tape of FIG. 1, illustrating the layers thereof.

### DETAILED DESCRIPTION

The following detailed description will illustrate the general principles of the invention, examples of which are additionally illustrated in the accompanying drawings. In the drawings, like reference numbers indicate identical or functionally similar elements.

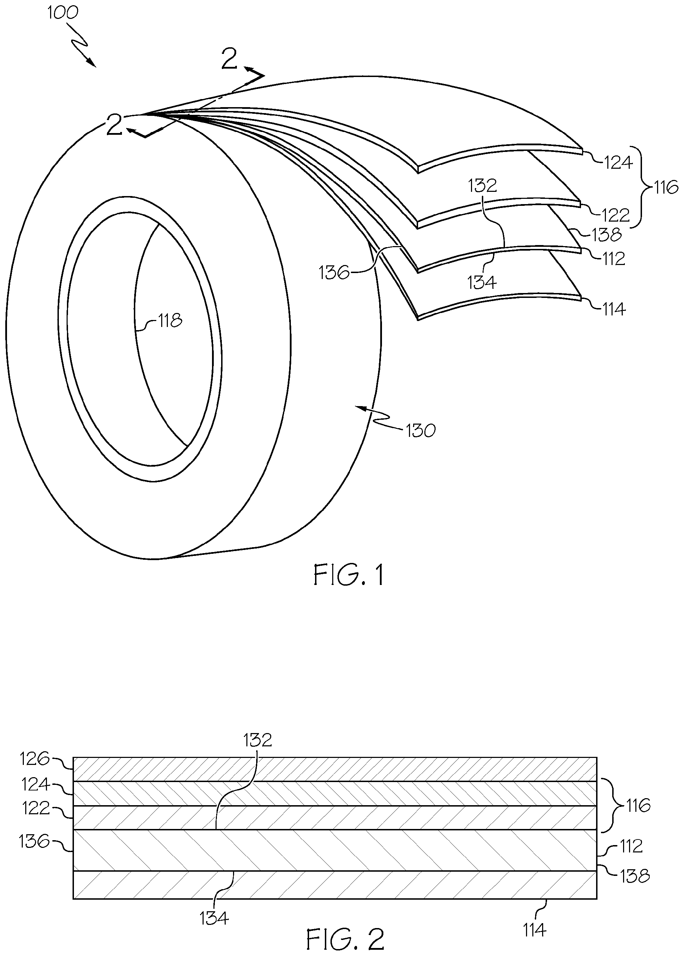

FIG. 1 illustrates a roll 100 of water activated tape 130 wound onto a core 118. Referring to FIGS. 1 and 2 for explanation, from top to bottom relative to the page, the water activated tape 130 includes a release layer 126 (optional), a film reinforcement 116 extrusion laminated to a paper backing 112, and a water activated adhesive 114. The paper backing 112 (also referred to as a substrate) has a first major (top) surface 132, a second major (bottom) surface 134, and a first side 136 and a second side 138. Applied to the bottom surface 134 of the backing 112 is the water activated adhesive 114, and applied to the top surface of the paper backing 112 is the film reinforcement 116. Extrusion lamination involves bring the plurality of layers together with a softened or molten layer therebetween that adheres the layers together, which once set, solidifies.

The film reinforcement 116 includes an oriented film as an outermost film layer 124 extrusion laminated to the paper backing 112 by a lamination layer 122 containing one or more of an enhanced polyethylene resin, a polyolefin plastomer, a very low density polyethylene, a nylon, a polyester, and a co-polyester. The outermost film layer 124 may be a polyester film, nylon film, polyethylene film or a polypropylene film or any other polymer capable of being formed into a thin oriented film structure. In one embodiment, the oriented film is biaxially-oriented. In another embodiment, the oriented film is monoaxially oriented. The oriented film is present at a thickness of about 0.5 mil to about 2 mil. In another embodiment, the film is present at a thickness of about 1.0 mil (25 micron). In one exemplary embodiment, disclosed in Example 1, the film layer 124 is a biaxially-oriented polypropylene, in particular a biaxially-oriented polypropylene homopolymer. In another exemplary embodiment, disclosed in Examples 2-4, the film layer 124 is a biaxially-oriented polyethylene terephthalate, which is a polyester film.

The lamination layer 122 includes a material that can be softened or melted for extrusion lamination and will adhere the selected oriented film layer 124 to the paper backing 112. Typically, the lamination layer 122 will have at least one material therein that is capable of forming a bond to both the paper backing and the oriented film layer. For example, when the oriented film includes a polyethylene, then the lamination layer likewise can include a polyethylene, such as an enhanced polyethylene resin, a polyolefin plastomer, and/or a very low density polyethylene. In another embodiment, the lamination layer 122 may be a nylon or polyester or co-polyester material. If a film such as an oriented polyester is used, then the laminating layer can be a polyester and/or other materials such as one or more plastomers. An embodiment with an oriented polyester as the film and a laminating layer comprising one or more plastomers without a polyester present will require the surface of the film being laminated with the laminating layer to be treated using such methods as corona or flame treatment to ensure proper adhesion.

Example suitable enhanced polyethylene resins are available from Dow Chemical Company under the brand ELITE™. These are ethylene alpha-olefin resins. In one embodiment, the enhanced polyethylene resin has a melt mass flow rate of greater than 3.5 g/10 min, more preferably greater than 5 g/10 min, and has a melting temperature (thermal, not extrusion) of greater than 200°F, more preferably greater than 250°F. In one embodiment, the lamination layer 122 consists of an ELITE™ enhanced polyethylene resin having a density of about 0.91 g/cm³, a melt index of about 15 g/10 min, and a melting temperature of about 255°F. In another embodiment, the lamination layer 122 comprises about 40% to about 99% w/w of an ELITE™ enhanced polyethylene resin having a density of about 0.91 g/cm³, a melt mass flow rate of about 15 g/10 min, and a melting temperature of about 255°F, the balance being one or more other polyethylene resins having a density greater than 0.91 g/cm³, a melting temperature within about plus or minus 5°F of the melting temperature of the enhanced polyethylene resin, and/or a melt index of greater than 5 g/10 min.

In another embodiment, the lamination layer comprises about 70% to 85% w/w of the enhanced PE resin, about 10% to 25% w/w of one or more other polyethylene resins, and the balance being additives. The enhanced PE resin will preferably be present at a percentage of about 20% to 100% w/w, and most preferably from about 30% to 80% w/w. The one or more "other" polyethylene resins, may include linear low density polyethylene (LLDPE), low density polyethylene (LDPE), medium density polyethylene (MDPE), high density polyethylene (HDPE), metallocene variations of any of the forgoing that are available. In one embodiment, LDPE is added to the enhanced PE resin to improve extrusion processability such as reducing neck-in and improving melt strength. It is typically added at about 10% - 40% w/w to achieve these improvements. The preferable melt index for the LDPE in a cast extrusion coating process is about 1-20 g/10 min, preferably 3-10 g/10 min.

Suitable polyolefin plastomers are available from Dow Chemical Company under the brand AFFINITY™ and from Exxon Mobile Corporation under the brand EXACT™. The AFFINITY™ polyolefin plastomers have densities in the range of 0.870 g/cm³ to 0.878 g/cm³, a melting point per Dow Chemical's own test method of 154°F to 158°F, and a melt index of 500 g/10 min to 1250 g/10 min at 190°C with a 2.16 kg weight. The EXACT™ plastomers are metallocene catalyzed ethylene alpha olefin copolymers. Suitable metallocene catalyzed ethylene alpha olefin copolymers for the applications disclosed herein include those having a density in the range of 0.870 g/cm³ to 0.905 g/cm³, a melt index in the range of 1-30 g/10 min, and 2-20 g/10 min.

Suitable very low density polyethylenes are available from Dow Chemical Company under the brand FLEXOMER™, and have a density in a range of about 0.905 to about 0.910 g/cm³ and a melt mass flow rate in a range of 0.5 g/10 min to 2.5 g/10 min.

The lamination layer 122 is present at a thickness of about 0.5 mil to about 2 mil. In another embodiment, the lamination layer 122 is present at a thickness of about 1.0 mil (25 micron) to about 1.3 mil (32.5 micron).

Additives for inclusion in the lamination layer may include one or more of UV inhibitors, antioxidants, pigments, and antistatic agents, but are not limited thereto.

The water activated tape 130 as a result of the extrusion lamination of the outermost film layer 124 to the paper backing 112 is not easily strippable therefrom. That is, once laminated, it is not easy to separate the outermost film layer 124 from the paper backing 112.

Paper backing 112 may be any type of paper including, but not limited to, creped paper, non-creped paper, or release paper. Preferably, the paper backing 112 is a Kraft paper. Creped NBSK (Northern Bleached Softwood Kraft) paper web is one suitable backing for use in this invention. In one embodiment, Kraft paper is used and is a 20 to 57 lb Kraft paper.

The water activated adhesive 114 may be applied to the paper backing 112 as a solvent-cast, aqueous, solventless, or molten film or as a coating layer using either extrusion, any manner of roll, knife, rod, or blade coating, curtain coating or any suitable method. In one embodiment, the water activated adhesive 114 is present at a thickness of about 0.1 mil to about 2.5 mil. The water activated adhesive 114 may be any conventional water activated adhesive or hereinafter developed adhesive suitable for box sealing or carton sealing tapes (also referred to as packaging tapes). In one embodiment, the water activated adhesive 114 is based on a starch from corn, sorghum, wheat, sago, tapioca, legumes, barley, rice, and/or potatoes. In another embodiment, the water activated adhesive 114 may be a polyvinyl alcohol-based, remoistenable adhesive.

A continuous method of manufacturing the film laminated water activated tapes includes providing a water activated paper tape comprising a paper backing having a water activated adhesive defining a bottom major surface thereof, and extrusion laminating to the paper backing, opposite the water activated adhesive, a film reinforcement structure. The film reinforcement structure includes an outermost oriented polyolefin film, and an innermost lamination layer comprising one or more of an enhanced polyethylene resin, a polyolefin plastomer, a very low density polyethylene, a nylon, a polyester, and a co-polyester. The extrusion laminating disposes the innermost lamination layer contiguous to the paper backing and includes coextruding the outermost polyolefin film and the innermost lamination layer together onto the paper backing on a surface opposite the adhesive layer. The method may also include reducing the temperature of the tape after the coextruding of the outermost polyolefin film and the innermost lamination layer and thereafter winding the tape onto a roll and slitting the rolled tape into a plurality of rolls of film laminated water-activation tape.

In one embodiment, coextruding includes extruding the outermost polyolefin film to have a thickness of about 0.5 mil to about 2.0 mil and extruding the innermost lamination layer to have a thickness of about 0.5 mil to about 2.0 mil.

In another embodiment, the continuous method of manufacturing a film laminated water activated tape may also include providing the paper backing and applying the water activated adhesive to a bottom major surface thereof before coextruding the outermost polyolefin film and lamination layers onto the paper backing. The lamination layer composition is as described above and the oriented polyolefin film may be a biaxially oriented polypropylene film or a biaxially oriented polyethylene terephthalate.

The water activated paper tapes described above eliminate the need for a filament scrim reinforcement layer and only require one layer of paper. This results in a tape product with uniform puncture and tear properties at a similar or lower total cost to commercially available carton sealing tapes today as well as producing a thinner tape that will provide more length for a given roll diameter, requiring fewer roll changes on applicating equipment. For example, rolls with an outer diameter of 6" wound on a 1" core would have approximately 420' for a 5.5 mil thick tape of the invention compared to approximately 290' of an 8 mil thick filament reinforced, water activated tape. Examples of film laminated water activated tapes, made according to the methods described above, are included below.

### EXAMPLE 1

For the data presented below, a 140 grade water activated paper tape (already having the adhesive applied thereto in an independent manufacturing process) was extrusion laminated with a 25 micron biaxially-oriented polypropylene (BOPP) film using approximately 30 gsm of an enhanced polyethylene resin, Dow ELITE™ 5815 enhanced polyethylene resin, as the lamination layer connecting the BOPP film to the paper backing of the water activated paper tape. The water activated paper tape and the BOPP film are relatively stiff structures. In contrast, the Dow ELITE™ 5815 enhanced polyethylene resin is a soft resin having a density of 0.91 g/cm³, a melt index of 15 g/10 min, a relatively low modulus, but high melting point (melting temperature of 255°F).

In Table 1 below, "MD" stands for the machine direction, and "TD" stands for the transverse direction relative to the machine direction.

**TABLE 1**

| **TESTS** | **PERFORMANCE** | **Test Standard** |
|---|---|---|
| Weight (oz./yd²) (gsm) | 6.04 | ASTM D3776 |
| Breaking Strength MD (lb/in) | 42.1 | ASTM D5035 |
| Breaking Strength TD (lb/in) | 46.6 | ASTM D5035 |
| Grab Strength MD (lb) | 72.2 | ASTM D5034 |
| Grab Strength TD (lb) | 73.0 | ASTM D5034 |
| Trapezoidal Tear MD (lb) | 32.7 | ASTM D4533 |
| Trapezoidal Tear MD (lb) (notched) | 2.3 | ASTM D4533 |
| Trapezoidal Tear TD (lb) | 10.9 | ASTM D4533 |
| Trapezoidal Tear TD (lb) (notched) | 2.3 | ASTM D4533 |
| Tongue Tear MD (lb) | 1.6 | ASTM D2261 |
| Tongue Tear TD (lb) | 2.2 | ASTM D2261 |
| Thickness (mil) | 8.5 | ASTM D1777 |
| Peel Strength (lb) | 1.374* | ASTM D413 |

| | | |
|---|---|---|
| * cohesive failure of the paper layer | | |

For the Trapezoidal tear tests, these were conducted as notched or un-notched trials. For the notched trials, the samplers were notched and torn at the notch, and the failure was observed to be mostly a function of the failure of the lamination layer 122. For the unnotched trials, the tear propagated under the polyolefin film 124 until the polyolefin film 124 failed.

For this example, there was skepticism that a biaxially oriented polypropylene would provide enough strength for sufficient tear. It was originally thought that a monoaxially oriented polypropylene would be required. However, surprisingly, the film laminated, water activated paper tape had a significant increase in the transverse direction (TD) tear initiation strength. The unnotched TD tear strength (Trapezoidal Tear TD) in Table 1 above is representative of the force required to initiate the transverse direction tearing of a tape. Once the tear is initiated, it propagates much more easily as seen by the notched tear. This is beneficial in that the tape can withstand forces that would break it on a box in transport but is relatively easily hand tearable. No brittle tear was experienced.

### EXAMPLES 2-4

For the data presented below, a 140 grade water activated paper tape (already having the adhesive applied thereto in an independent manufacturing process) was extrusion laminated with a 25 micron biaxially-oriented polyethylene terephthalate (BOPET) film using approximately 1.2 mil thickness of a lamination layer composition. The lamination layer composition included Dow ELITE™ 5815 enhanced polyethylene resin and a low density polyethylene resin as the lamination layer, and successfully connected the BOPET film to the paper backing of the water activated paper tape. The water activated paper tape and the BOPET film are relatively stiff structures. In contrast, the Dow ELITE™ 5815 enhanced polyethylene resin is a soft resin having a density of 0.91 g/cm³, a melt index of 15 g/10 min, a relatively low modulus, but high melting point (melting temperature of 255°F). The linear low density polyethylene (LDPE), DOW™ LDPE 722, has a density of about 0.92 g/cm³ and a melt index of about 8 g/10 min, and a melting temperature of about 224°F.

**TABLE 2**

| | **Trial 2** | **Trial 3** | **Trial 4** |
|---|---|---|---|
| Film Layer | BOPET | BOPET | BOPET |
| Lamination layer | 80% w/w enhanced PE resin | 80% w/w enhanced PE resin | 80% w/w enhanced PE resin |
| | 20% w/w LDPE | 20% w/w LDPE | 20% w/w 722 LDPE |
| Lamination Layer thickness | 1.2 mil | 1.2 mil | 1.2 mil |
| Trapezoidal Tear TD (non-notched) | 5.1 lb | 10.8 lb | 10.0 lb |
| Trapezoidal Tear TD (notched) | 2.5 lb | 4.6 lb | 1.4 lb |
| **Comments:** | Initial tear propagation in non-notched samples produced high initial peaks leading to a much higher maximum trap tear strength | Initial tear propagation in non-notched samples produced high initial peaks leading to a much higher maximum trap tear strength | Initial tear propagation in non-notched samples produced high initial peaks leading to a much higher maximum trap tear strength |

The Trapezoidal Tear Strength, ASTM 4533, test was used, i.e., a trapezoidally-shaped sample, to evaluate the transverse direction (TD) tear initiation strength of the disclosed laminated film-WAT. The data in Table 2 shows that the unnotched TD tear strength (Trapezoidal Tear TD), representative of the force required to initiate the transverse direction tearing of a tape, is sufficient such that the tape can withstand forces that would break it on a box in transport. However, once the tear is initiated, based on the lower value for the notched Trapezoidal Tear TD, it propagates much more easily through the tape, evidencing that the tape is relatively easily hand tearable.

### EXAMPLES 6-6

**TABLE 3**

| Test | Units | Trial 5 | Trial 6 | Venom® reinforced water-activated tape |
|---|---|---|---|---|
| Film | N/A | BOPET | BOPP | N/A |
| Lamination layer | N/A | 80% w/w enhanced PE resin | 80% w/w enhanced PE resin | N/A |
| | | 20% w/w LDPE | 20% w/w LDPE | |
| Adhesive layer | N/A | starch based adhesive | starch based adhesive | starch based adhesive |
| Adhesive weight | lb/rm | 14.2 | 14.5 | 13.9 |
| Total caliper | mils | 5.0 | 5.4 | 5.5 |
| Paper backing caliper | mils | 4.5 | 4.6 | 5.7 |
| Lamination layer caliper | mils | 1 | 1 | N/A |
| Finch tear CD | 1b/in | 56 | 39.9 | 4.4 |
| Elmendorf tear CD | g | 91.5 | 159.8 | 688 |

The examples in Table 3 were also made with a lamination layer composition of Dow ELITE™ 5815 enhanced polyethylene resin and a low density polyethylene resin that successfully connected the film to the paper backing of the water activated paper tape.

The comparative example in Table 3 is VENOM® reinforced water-activated tape, a natural Kraft, 3-way reinforced, light duty, economy grade, water-activated carton sealing tape manufactured with a starch based adhesive. The three trial film laminated water activated tapes have generally similar adhesive layers and adhesive weight, generally similar paper backings and total caliper. However, the laminated water activated tapes of Trials 5-7 perform differently with respect to tear initiation strength, represented by the Finch Tear (ASTM D824) data in Table 3 above. The Finch Test is tear initiation in the cross or transverse direction. Here, all three Trials have a higher Finch Test value, which shows that the tape can withstand forces that would break it on a box in transport. Yet, the Elmendorf Tear (ASTM D9122) in the cross or transverse direction is much lower for the three Trials compared to the comparative example. This shows that the film laminated water activated tapes of Trials 5-6 are relatively easily hand tearable after the tear is initiated in the tape, and that the initial tear is not so easily initiated that the tape would fail during transport of a carton to which the tape was applied.

Other tests conducted using 100% HDPE as the lamination layer with a BOPP film and with a BOPET film had poor adhesion, such that it does not make a useful carton sealing tape.

## Claims

1. A water activated tape (130) comprising:
a paper backing (112) having a top surface (132) and a bottom surface (134);
a water activated adhesive (114) applied to the bottom surface of the paper backing; and
a film reinforcement structure (116) applied to the top surface of the paper backing, wherein the film reinforcement structure comprises:
an outermost oriented film (124) comprising one or more of a biaxially oriented polypropylene film and a biaxially oriented polyethylene terephthalate film; and
a lamination layer (122) comprising one or more of an enhanced polyethylene resin, a polyolefin plastomer, a very low density polyethylene, a nylon, a polyester, and a co-polyester laminating the outermost oriented film to the paper backing.

2. The water activated tape of claim 1, wherein the outermost film has a thickness of 0.5 mil to 2 mil.

3. The water activated tape of claim 2, wherein the lamination layer has a thickness of 0.5 mil to 2 mil and, optionally or preferably, wherein the lamination layer has a thickness of 1 mil to 1.3 mil.

4. The water activated tape of any preceding claim, wherein the paper backing comprises Kraft paper.

5. The water activated tape of any preceding claim, wherein the lamination layer comprises the enhanced polyethylene resin.

6. The water activated tape of claim 5, wherein the lamination layer further comprises a low density polyethylene resin and, optionally or preferably wherein the lamination layer comprises 40% w/w to 99% w/w of the enhanced polyethylene resin.

7. A method of making a film laminated water activated paper tape comprising:
providing a water activated paper tape comprising a paper backing having a water activated adhesive defining a bottom major surface thereof;
extrusion laminating to the paper backing, opposite the water activated adhesive, a film reinforcement structure comprising:
an outermost oriented film comprising one or more of a biaxially oriented polypropylene film and a biaxially oriented polyethylene terephthalate film; and
an innermost lamination layer comprising one or more of an enhanced polyethylene resin, a polyolefin plastomer, a very low density polyethylene, a nylon, a polyester, and a co-polyester;
wherein the innermost lamination layer is contiguous to the paper backing.

8. The method of claim 7, wherein extrusion laminating includes coextruding the outermost oriented film and the innermost lamination layer, and thereafter reducing the temperature thereof.

9. The method of claim 8, wherein coextruding includes extruding the outermost oriented film to have a thickness of 0.5 mil to 2.0 mil and extruding the innermost lamination layer to have a thickness of 0.5 mil to 2.0 mil.

10. The method of any of claims 7 to 9, further comprising providing the paper backing and applying the water activated adhesive to a bottom major surface thereof.

11. The method of any of claims 7 to 10, wherein the innermost lamination layer comprises the enhanced polyethylene resin and, optionally or preferably, wherein the innermost lamination layer is 100% an enhanced polyethylene resin.

12. The method of any of claims 7 to 11, wherein the lamination layer comprises 40% w/w to 99% w/w of the enhanced polyethylene resin.

13. The method of claim 12, wherein the lamination layer comprises in balance a low density polyethylene.

## Patentansprüche

1. Wasseraktivierter Streifen (130), umfassend:
eine Papierunterstützung (112), die eine obere Oberfläche (132) und eine untere Oberfläche (134) aufweist;
einen wasseraktivierten Klebstoff (114), der auf der unteren Oberfläche der Papierunterstützung aufgetragen ist; und
eine Folienverstärkungsstruktur (116), die auf der oberen Oberfläche der Papierunterstützung aufgetragen ist, wobei die Folienverstärkungsstruktur umfasst:
eine äußerste orientierte Folie (124), die eines oder mehrere umfasst von einer biaxial orientierten Polyproylenfolie und einer biaxial orientierten Polyethylenterephthalatfolie; und
eine Laminierungsschicht (122), die eines oder mehrere umfasst von einem erweiterten Polyethylenharz, einem Polyolefinplastomer, einem Polyethylen mit sehr geringer Dichte, einem Nylon, einem Polyester und einem Copolyester, die die äußerste orientierte Folie an die Papierunterstützung laminiert.

2. Wasseraktivierter Streifen nach Anspruch 1, wobei die äußerste orientierte Folie eine Dicke von 0,5 mil bis 2 mil aufweist.

3. Wasseraktivierter Streifen nach Anspruch 2, wobei die Laminierungsschicht eine Dicke von 0,5 mil bis 2 mil aufweist und, optional oder vorzugsweise, wobei die Laminierungsschicht eine Dicke von 1 mil bis 1,3 mil aufweist.

4. Wasseraktivierter Streifen nach einem der vorstehenden Ansprüche, wobei die Papierunterstützung Kraftpapier umfasst.

5. Wasseraktivierter Streifen nach einem der vorstehenden Ansprüche, wobei die Laminierungsschicht das erweiterte Polyethylenharz umfasst.

6. Wasseraktivierter Streifen nach Anspruch 5, wobei die Laminierungsschicht weiter ein Polyethylenharz mit niedriger Dichte umfasst und, optional oder vorzugsweise, wobei die Laminierungsschicht 40 Gew.-% bis 99 Gew.-% des erweiterten Polyethylenharzes umfasst.

7. Verfahren eines Herstellens eines folienlaminierten wasseraktivierten Papierstreifens, umfassend:
Bereitstellen eines wasseraktivierten Papierstreifens, der eine Papierunterstützung umfasst, die einen wasseraktivierten Klebstoff aufweist, der eine untere Hauptoberfläche davon definiert;
Extrusionslaminieren an die Papierunterstützung, entgegengesetzt zu dem wasseraktivierten Klebstoff, einer Folienverstärkungsstruktur, umfassend:
eine äußerste orientierte Folie, die eines oder mehrere umfasst von einer biaxial orientierten Polyproylenfolie und einer biaxial orientierten Polyethylenterephthalatfolie; und
eine innerste Laminierungsschicht, die eines oder mehrere umfasst von einem erweiterten Polyethylenharz, einem Polyolefinplastomer, einem Polyethylen mit sehr geringer Dichte, einem Nylon, einem Polyester und einem Copolyester,
wobei die innerste Laminierungsschicht an die Papierunterstützung angrenzt.

8. Verfahren nach Anspruch 7, wobei Extrusionslaminieren Koextrudieren der äußersten orientierten Folie und der innersten Laminierungsschicht und danach verringern der Temperatur davon einschließt.

9. Verfahren nach Anspruch 8, wobei Koextrudieren Extrudieren der äußersten orientierten Folie, sodass sie eine Dicke von 0,5 mil bis 2,0 mil aufweist, und Extrudieren der innersten Laminierungsschicht, sodass sie eine Dicke von 0,5 mil bis 2,0 mil aufweist, einschließt.

10. Verfahren nach einem der Ansprüche 7 bis 9, weiter umfassend Bereitstellen der Papierunterstützung und Auftragen des wasseraktivierten Klebstoffs auf eine untere Hauptoberfläche davon.

11. Verfahren nach einem der Ansprüche 7 bis 10, wobei die innerste Laminierungsschicht das erweiterte Polyethylenharz umfasst und, optional oder vorzugsweise, wobei die innerste Laminierungsschicht zu 100% ein erweitertes Polyethylenharz ist.

12. Verfahren nach einem der Ansprüche 7 bis 11, wobei die Laminierungsschicht 40 Gew.-% bis 99 Gew.-% des erweiterten Polyethylenharzes umfasst.

13. Verfahren nach Anspruch 12, wobei die Laminierungsschicht ausgeglichen ein Polyethylen mit niedriger Dichte umfasst.

## Revendications

1. Bande activée par l'eau (130) comprenant :
un support de papier (112) ayant une surface supérieure (132) et une surface inférieure (134) ;
un adhésif activé par l'eau (114) appliqué sur la surface inférieure du support de papier ; et
une structure de renforcement de film (116) appliqué sur la surface supérieure du support de papier, dans laquelle la structure de renforcement de film comprend :
un film orienté le plus externe (124) comprenant un ou plusieurs d'un film de polypropylène orienté de manière biaxiale et un film de polytéréphtalate d'éthylène orienté de manière biaxiale ; et
une couche de stratification (122) comprenant un ou plusieurs d'une résine de polyéthylène améliorée, un plastomère de polyoléfine, un polyéthylène très basse densité, un nylon, un polyester, et un co-polyester stratifiant le film orienté le plus externe sur le support de papier.

2. Bande activée par l'eau selon la revendication 1, dans laquelle le film le plus externe présente une épaisseur de 0,5 mil à 2 mil.

3. Bande activée par l'eau selon la revendication 2, dans laquelle la couche de stratification présente une épaisseur de 0,5 mil à 2 mil et, facultativement ou de préférence, dans laquelle la couche de stratification présente une épaisseur de 1 mil à 1,3 mil.

4. Bande activée par l'eau selon l'une quelconque des revendications précédentes, dans laquelle le support de papier comprend un papier Kraft.

5. Bande activée par l'eau selon l'une quelconque des revendications précédentes, dans laquelle la couche de stratification comprend la résine de polyéthylène améliorée.

6. Bande activée par l'eau selon la revendication 5, dans laquelle la couche de stratification comprend en outre une résine de polyéthylène basse densité et, facultativement ou de préférence dans laquelle la couche de stratification comprend 40 % en poids/poids à 99 % en poids/poids de la résine de polyéthylène améliorée.

7. Procédé de fabrication d'une bande de papier activée par l'eau stratifiée avec un film comprenant :
la fourniture d'une bande de papier activée par l'eau comprenant un support de papier ayant un adhésif activé par l'eau définissant une surface principale inférieure de celui-ci ;
la stratification par extrusion sur le support de papier, à l'opposé de l'adhésif activé par l'eau, d'une structure de renforcement de film comprenant :
un film orienté le plus externe comprenant un ou plusieurs d'un film de polypropylène orienté de manière biaxiale et un film de polytéréphtalate d'éthylène orienté de manière biaxiale ; et
une couche de stratification la plus interne comprenant un ou plusieurs d'une résine de polyéthylène améliorée, un plastomère de polyoléfine, un polyéthylène très basse densité, un nylon, un polyester, et un co-polyester ;
dans lequel la couche de stratification la plus interne est contiguë au support de papier.

8. Procédé selon la revendication 7, dans lequel la stratification par extrusion inclut la coextrusion du film orienté le plus externe et de la couche de stratification la plus interne, et ensuite la réduction de la température de ceux-ci.

9. Procédé selon la revendication 8, dans lequel la coextrusion inclut l'extrusion du film orienté le plus externe pour avoir une épaisseur de 0,5 mil à 2,0 mil et l'extrusion de la couche de stratification la plus interne pour avoir une épaisseur de 0,5 mil à 2,0 mil.

10. Procédé selon l'une quelconque des revendications 7 à 9, comprenant en outre la fourniture du support de papier et l'application de l'adhésif activé par l'eau sur une surface principale inférieure de celui-ci

11. Procédé selon l'une quelconque des revendications 7 à 10, dans lequel la couche de stratification la plus interne comprend la résine de polyéthylène améliorée et, facultativement ou de préférence, dans lequel la couche de stratification la plus interne est à 100 % une résine de polyéthylène améliorée.

12. Procédé selon l'une quelconque des revendications 7 à 11, dans lequel la couche de stratification comprend 40 % en poids/poids à 99 % en poids/poids de la résine de polyéthylène améliorée.

13. Procédé selon la revendication 12, dans lequel le reste de la couche de stratification comprend un polyéthylène basse densité.
